# EUROPÄISCHE PATENTSCHRIFT

(11) **EP 1 549 983 B1**
(45) Veröffentlichungstag und Bekanntmachung des Hinweises auf die Patenterteilung: **27.05.2009**
(21) Anmeldenummer: 03750629.2
(22) Anmeldetag: 25.09.2003
(51) Int. Cl.: G02B 7/00

(54) **FILTERHALTER**
FILTER HOLDER
PORTE-FILTRES

(30) Priorität: 25.09.2002 DE 10244720; 11.03.2003 DE 10310603
(43) Veröffentlichungstag der Anmeldung: 06.07.2005
(73) Patentinhaber: Olympus Soft Imaging Solutions GmbH, 48149 Münster (DE)
(72) Erfinder: BAIGAR, Erik, 87616 Marktoberdorf (DE); HENKEL, Tobias, 81547 München (DE); SEEL, Matthias, 80339 München (DE)
(74) Vertreter: Jordan, Volker Otto Wilhelm
(86) Internationale Anmeldenummer: PCT/EP2003/010676
(87) Internationale Veröffentlichungsnummer: WO 2004/031825

(56) Entgegenhaltungen:
- DE-A- 19 702 754
- US-A- 5 838 860
- US-A- 6 011 662
- US-A1- 2002 075 685

## Beschreibung

Die Erfindung betrifft einen Filterhalter, der eine Anzahl von im radialen Abstand zu einer Achse angeordneten Filteraufnahmen aufweist, beispielsweise in der Art eines Filterrads, über dessen Umfang eine Mehrzahl von Filteraufnahmen verteilt sind. Die Filteraufnahmen dienen zur Aufnahme unterschiedlicher optischer Filter und enthalten Positionierungsflächen für die Filter, wobei der Filterhalter um seine Achse drehbar in einem optischen Strahlengang, z.B. im Strahlengang einer Beleuchtungsanordnung, vorzugsweise für ein optisches Untersuchungsgerät (ggf. Mikroskop), oder im Strahlengang (ggf. Beleuchtungsstrahlengang oder Detektions- oder Beobachtungsstrahlengang) eines optischen Untersuchungsgeräts (ggf. Mikroskop), derart positioniert oder positionierbar ist, dass durch Drehung des Filterhalters wahlweise einer der optischen Filter im Strahlengang anordenbar ist.

Derartige Filterhalter - die zum Beispiel die Form von Filterrädern mit bis zu ca. 8 Filteraufnahmen einnehmen können - dienen zum schnellen Wechsel der im Strahlengang des Untersuchungsgeräts befindlichen optischen Filter. Es sind aber durchaus auch Filterhalter mit weniger Filteraufnahmen denkbar, beispielsweise mit nur zwei Aufnahmen, die in einem jeweiligen Halterungsarm des Filterhalters ausgebildet sind.

Unter optischen Filtern verstehen sich hier sämtliche lichtdurchlässigen Elemente, die die Lichteigenschaften in irgendeiner Form beeinflussen oder ändern, wie zum Beispiel chromatische Filter zur Wellenlängenselektion, Graufilter, polarisierende Filter oder auch andere Einsätze, etwa für Dunkelfeld- oder Phasenkontrastmikroskopie. Insbesondere ist an Fluoreszenzmikroskopie gedacht, worin durch raschen Wechsel der Filter unterschiedliche Farbstoffe angeregt werden oder im Falle der Emission detektiert werden können.

Herkömmlich sind die Filter betriebsmäßig unlösbar in der jeweiligen Filteraufnahme befestigt. Um eine noch größere Anzahl verschiedener optischer Filter bereitzustellen, könnte man die Anzahl der Filteraufnahmen entsprechend erhöhen, was jedoch häufig aus Platzproblemen (etwa im Untersuchungsgerät bzw. in der Beleuchtungsanordnung) nicht möglich ist. Wegen der begrenzten Anzahl der Filter pro Filterhalter müssen daher die gesamten Filterhalter häufig ausgewechselt werden.

Ein Filterhalter gemäß dem Oberbegriff des Anspruchs 1 ist aus der US 2002/0075685 A1 bekannt. In dem bekannten Filterhalter sind sechs kreisförmige Löcher zur Aufnahme von Filtern um eine Drehachse des Filterhalters herum verteilt angeordnet. In die Löcher eingesetzte Filter werden durch eine Spanneinrichtung festgehalten, so dass sie in einer integrierten Stellung betriebsmäßig lösbar sind, um einen wahlweisen Austausch von Filtern zu erlauben.

Ein weiterer Filterhalter ist aus der DE 197 02 754 bekannt, wobei der Filterhalter an einer Filterposition einen austauschbaren Filterrahmen aufweist, der mittels mechanischer oder magnetischer Hilfsmittel im eingesetzten Zustand am Filterhalter gehalten werden kann.

Ferner ist aus der US 5,838,860 ein Filterhalter bekannt, bei welchem in einer Grundplatte rechteckige Filteraufnahmen in Form von rechteckigen Löchern gebildet sind. An den Rändern der Filteraufnahmen sind einstückige Federlaschen ausgebildet, welche federelastisch auf den Rand eines in die Aufnahme eingesetzten Filters wirken.

Aufgabe der vorliegenden Erfindung ist es, einen Filterhalter für den Einsatz mit betriebsmäßig lösbaren optischen Filtern der vorstehend genannten Art derart zu verbessern, dass ein leichtere und schnelleres Auswechseln einzelner Filter ermöglicht wird.

Diese Aufgabe wird erfindungsgemäß durch einen Filterhalter nach Anspruch 1 gelöst.

Die Spanneinrichtung gestattet es, bei eingebautem Filterhalter jeden Filter separat manuell - oder mittels eines Werkzeugs - gegen einen anderen auszutauschen. Bewährt hat sich ein rein manuelles Auswechseln mit der beispielsweise mit einem Handschuh (zur Vermeidung von Verschmutzungen des Filters) bewaffneten Hand. Darüber hinaus sorgt die Spanneinrichtung dafür, dass der jeweils eingesetzte Filter nicht nur gegen Herausfallen gesichert ist, sondern auch gegen die Positionierungsflächen des Filterhalters gespannt und hierdurch in der vorbestimmten Stellung im optischen Weg des Geräts positioniert wird.

Betreffend die Filteraufnahmen, die jeweilige Spanneinrichtung und für die Anordnung in den Filteraufnahmen vorgesehene Filter wird vorrangig daran gedacht, dass das jeweilige Filter unmittelbar in der Filteraufnahme gehalten ist, ohne gesonderte Halterahmen oder Halteelemente, die den Eingriff zwischen dem jeweiligen optischen Filter einerseits und der Filteraufnahme bzw. der Spanneinrichtung andererseits vermitteln. Bei den Filtern kann es sich um solche Filter handeln, die alleine von einem optischen Substrat gebildet sind, sowie um Filter, die mit einem das jeweilige optische Substrat an einem Substratrand haltenden Halterahmen ausgeführt sind, der als integraler Bestandteil des jeweiligen Filters anzusehen ist. Beide Filtertypen sind im Fachgebiet gebräuchlich.

Erfindungsgemäß weisen Filteraufnahmen zur Aufnahme eines Filters - in Achsrichtung des Filterhalters betrachtet - eine den Filter zumindest bereichsweise umschreibende Innenkontur auf, wobei eine die Innenkontur definierende geschlossene Linie und der eingesetzte optische Filter radial über einen Außenumfang des Filterhalters vorsteht. Der Filter lässt sich an diesem vorstehenden Rand dann - auch ohne Zuhilfnahme von Werkzeugen - problemlos ergreifen.

Um den Filter jeweils problemlos einsetzen und ergreifen zu können, wird vorgeschlagen, dass die Filteraufnahmen jeweils radial auswärts offen sind. Sollen kreisförmige Filter verwendet werden können, kann -in Achsrichtung des Filterhalters betrachtet - die jeweilige Filteraufnahme eine kreisbogenförmige Innenkontur aufweisen, wobei der die Innenkontur definierende gedachte Kreis - und somit der eingesetzte optische Filter - radial über den Außenumfang des Filterhalters vorsteht.

Um eine radiale Auswärtsbewegung des eingesetzten optischen Filters zu verhindern, zum Beispiel bei schnellen Drehbewegungen des Filterhalters, wird vorgeschlagen, dass die radial auswärtige Öffnung der Filteraufnahmen in Umfangsrichtung des Filterhalters verengt ist.

Um für eine in Bezug auf die optische Geometrie des Untersuchungsgeräts eindeutige Positionierung der Filter zu sorgen, wird vorgeschlagen, dass die Positionierungsflächen der Filteraufnahmen wenigstens eine achsnormale Stützfläche zur Positionierung des eingesetzten Filters in einer der axialen Richtungen sowie zumindest eine sich axial erstreckende Stützfläche zur Positionierung des eingesetzten Filters in radialer sowie Umfangsrichtung des Filterhalters umfassen. Hierbei kann der Filter auf der achsnormalen Stützfläche plan aufliegen, während die radiale Positionierung durchaus mit Spiel erfolgen kann, um das Auswechseln des Filters zu erleichtern. Die achsnormalen Stützflächen können zweckmäßig in einer gemeinsamen Ebene liegen.

Es erscheint nicht völlig abwegig, einen Filterhalter bereitzustellen, bei dem die Positionierungsflächen nur wenigstens eine achsnormale Stützfläche zur Positionierung des eingesetzten Filters in eine der axialen Richtungen oder nur zumindest eine sich axial erstreckende Stützfläche zur Positionierung des eingesetzten Filters in radialer sowie Umfangsrichtung des Filters umfassen, ggf. in Kombination mit anderen Mitteln zur Positionierung des eingesetzten Filters in radialer sowie Umfangsrichtung des Filterhalters bzw. zum Positionieren des eingesetzten Filters in einer der axialen Richtungen.

Wenn die achsnormale Stützfläche und die sich radial erstreckende Stützfläche einen in der Filteraufnahme umlaufenden, zur anderen axialen Seite hin offenen, stufenförmigen Absatz bilden, wird - bei einwandfreier Positionierung des Filters - der nutzbare freie Filterdurchmesser des Filters nicht oder nur unwesentlich eingeschränkt. Dies gilt insbesondere auch dann, wenn die Spanneinrichtung Eingriffsabschnitte aufweist, die in Umfangsrichtung des Filterhalters gegenüber liegende Abschnitte der achsnormalen Stützfläche der Positionierungsflächen in Achsrichtung überlappen und mit dem eingesetzten Filter in Eingriff bringbar sind, und insbesondere die Spanneinrichtung zwischen ihren Eingriffsabschnitten der Innenkontur der Filteraufnahme im Wesentlichen folgend gabelförmig ausgespart ist.

Den Filteraufnahmen kann vorteilhaft jeweils eine weitere Spanneinrichtung zugeordnet sein, welche die jeweils eingesetzten optischen Filter gegen die oder wenigstens eine sich axial erstreckende Stützfläche andrückt. Durch diese Maßnahme kann auf einfache Weise vermieden werden, dass im Betrieb, also beim Indrehungversetzen und Wiederabbremsen des Filterhalters, Klappergeräusche auftreten.

Eine besonders bevorzugte Ausführungsform in diesem Zusammenhang zeichnet sich dadurch aus, dass die weitere Spanneinrichtung den jeweiligen Filter gegen zwei in Umfangsrichtung des Filterhalters gegeneinander beabstandete, sich axial erstreckende Stützflächen andrückt. Es wird vor allem daran gedacht, dass die weitere Spanneinrichtung den jeweiligen Filter im Wesentlichen in radialer Richtung, vorzugsweise nach radial außen, drückt.

Filter unterschiedlicher Dicke lassen sich stabil fixieren, wenn die Eingriffsabschnitte Nasen oder Kanten aufweisen, die zu den gegenüber liegenden Stützflächenabschnitten hin vorstehen und zum punktuellen Eingriff mit dem jeweiligen Filter dienen. Es wird hier an optische Filter gedacht, die alleine vom jeweiligen optischen Substrat gebildet sind, als auch an Filter, die mit einem das optische Substrat am Rand haltenden Halterahmen ausgeführt sind, der aber integraler Bestandteil des jeweiligen Filters ist. Gesonderte Halterahmen oder Halteelemente, die in Eingriff zwischen dem Filter bzw. optischen Substrat einerseits und dem erfindungsgemäßen Filterhalter andererseits vermitteln, sind nicht erforderlich.

Bevorzugt enthalten die Stützflächen den Nasen oder Kanten gegenüber liegende Aussparungen, in die im entlasteten Zustand der Spanneinrichtung die Nasen oder Kanten ragen. Hierdurch erreicht man eine relativ hohe Vorspannung der Spanneinrichtung auch bei einem in Achsrichtung relativ dünnen Filter. Wenn hier von "punktuellem Eingriff" mit dem jeweiligen Filter die Rede ist, so umfasst dies durchaus auch einen linienförmigen Eingriff, etwa durch eine jeweilige Kante bzw. kantenförmige Nase, oder einen kleinflächigen Eingriff durch eine Eingriffsfläche der jeweiligen Nase.

Um die Filter radial einwärts rasch einsetzen zu können, ohne mit einem besonderen Handgriff die Spanneinrichtung öffnen zu müssen, wird vorgeschlagen, dass die Eingriffsabschnitte der Spanneinrichtung zu axial von dem Filterhalter abstehenden Einführschrägen radial auswärts verlängert sind, um beim Einsetzen eines Filters mit dessen Rand in Eingriff zu treten und die Eingriffsabschnitte von den Positionierungsflächen weg zu bewegen.

Um einen jeweiligen Filter leicht entnehmen zu können, wird als besonders bevorzugt vorgeschlagen, dass die Eingriffsabschnitte derart ausgeführt sind, dass die Nasen oder Kanten gegenüber einer radialen Mitte der jeweiligen Filteraufnahme radial weiter innen liegen, derart, dass die Nasen oder Kanten an einem eingesetzten Filter an Stellen angreifen, die gegen über einer Mitte des Filters in Richtung nach radial innen bezogen auf den Filterhalter versetzt sind. Man kann dann den Filter besonders leicht aus einer durch den Filterhalter definierten Halteebene herausschwenken, ggf. gegen die vorstehend angesprochenen Einführschrägen. Der Weiterbildungsvorschlag ist besonders vorteilhaft im Zusammenhang mit der oben angesprochenen weiteren Spanneinrichtung, die als "Auswurfeinrichtung" dienen kann und in diesem Falle bevorzugt durch das angesprochene Herausschwenken des jeweiligen Filters aus der Halteebene aktivierbar ist.

Eine einfache und leichte Ausführung der Spanneinrichtung erhält man, wenn die Spanneinrichtung wenigstens eine nahe der Achse des Filterhalters an diesem festgelegte Blattfeder aufweist, deren Federzunge die Eingriffsabschnitte der Spanneinrichtung bildet. Auch die weitere Spanneinrichtung kann wenigstens eine am Filterhalter festgelegte Blattfeder aufweisen, deren Federzunge am eingesetzten Filter angreift und diesen gegen ein Widerlager drückt. Grundsätzlich sind auch andere Ausführungen der Spanneinrichtung bzw. weiteren Spanneinrichtung denkbar, solange sie den in der Aufgabenstellung definierten bzw. angestrebten Zweck erfüllen.

Die axiale Dicke des Filterhalters bleibt gering, wenn die Spanneinrichtungen der jeweiligen Filteraufnahmen an einer gemeinsamen axialen Seite des Filterhalters in Umfangsrichtung nebeneinander, ohne einander zu überlappen, angeordnet sind, so dass sich ohne Platzprobleme vorhandene Filterhalter mit unlösbar fixierten Filtern problemlos gegen erfindungsgemäße Filterhalter nachrüsten lassen.

Der Filterhalter kann am den optischen Strahlengang aufweisenden Gerät von Hand drehbar gelagert sein, beispielsweise mit einer der jeweiligen Filterstellung zugeordneten Verrastung, oder auch durch einen Elektromotor, zum Beispiel Schrittmotor, drehend angetrieben sein.

Die Erfindung betrifft ferner eine optische Filtervorrichtung, mit einem erfindungsgemäßen Filterhalter und einer diesen drehbar haltenden Drehbasis, die vorzugsweise einen Motor, ggf. Schrittmotor, aufweist, sowie gewünschtenfalls mit einer Drehpositionserfassungsanordnung.

Die Erfindung betrifft ferner eine Beleuchtungsanordnung für ein optisches Untersuchungsgerät (ggf. Mikroskop) sowie ein optisches Untersuchungsgerät (ggf. Mikroskop).

Nachfolgend wird eine bevorzugte, beispielhafte Ausführung der Erfindung in Bezug auf die beigefügten Zeichnungen beschrieben.
- Fig. 1: zeigt eine axiale Draufsicht auf einen Filterhalter;
- Fig. 2: zeigt einen achsenthaltenen Schnitt durch Fig. 1 entlang Linie II-II;
- Fig. 3: zeigt einen ähnlichen Schnitt wie Fig. 2, jedoch mit entfernt darge- stellter Blattfeder und einem einzusetzenden optischen Filter;
- Fig. 4: zeigt eine Draufsicht auf eine solche Blattfeder;
- Fig. 5: zeigt eine axiale Draufsicht auf ein weiteres Ausführungsbeispiel eines erfindungsgemäßen Filterhalters;
- Fig. 6: zeigt einen Achsen enthaltenden Schnitt durch Fig. 5 entlang Linie VI-VI ergänzt um einen weiteren Filter beim Einsetzen in den Filter- halter oder beim Entnehmen aus dem Filterhalter;
- Fig. 7: zeigt schematisch eine Ausführungsmöglichkeit für eine in radialer Richtung auf den in den Filterhalter eingesetzten Filter wirkende Spanneinrichtung, die den Filter gegen in radialer Richtung wirksame Widerlager anpresst, um Klappergeräusche zu vermeiden;
- Fig. 8: zeigt eine bevorzugte Ausführungsform einer in axialer Richtung auf den Filter wirkenden Blattfeder in Bezug auf die ebenfalls von einer Blattfeder gebildeten Spanneinrichtung der Fig. 7.

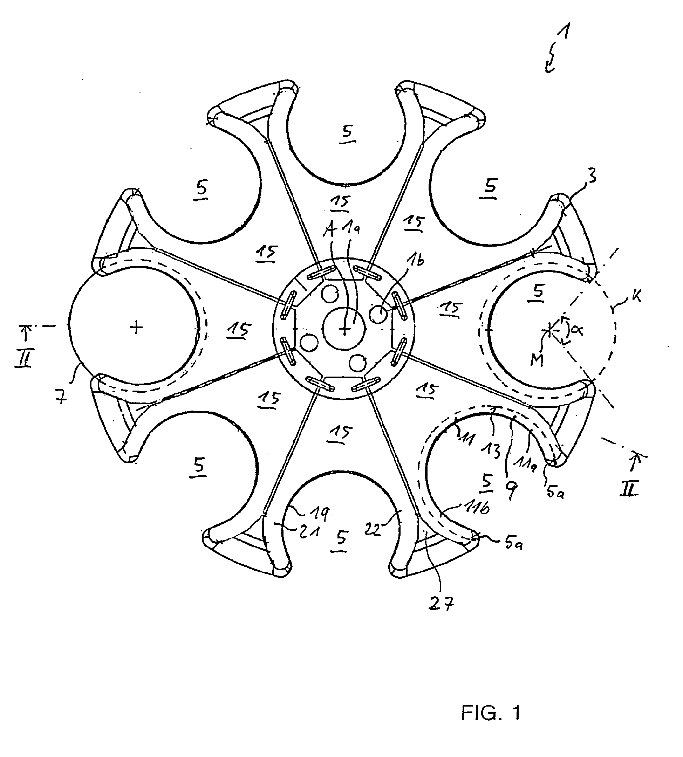

Der in den Figuren 1 bis 3 dargestellte Filterhalter 1 hat allgemein die Form einer flachen Scheibe, die um ihre Achse A-A manuell oder mittels eines nicht dargestellten Schrittmotors drehbar einem optischen Strahlengang zuordenbar, beispielsweise an einem ebenfalls nicht dargestellten optischen Untersuchungsgerät, zum Beispiel Mikroskop, oder in einer Beleuchtungsanordnung (beispielsweise für ein optisches Untersuchungsgerät, etwa Mikroskop), anbringbar ist. Eine Mittelbohrung 1 a des Filterhalters 1 ist von mehreren Drehmoment-Übertragungsbohrungen 1 b umgeben, über die der Filterhalter 1 mittels eines nicht dargestellten Antriebsmotors drehbar ist.

Der Filterhalter 1 enthält über seinen Außenumfang 3 verteilt eine Mehrzahl von - hier acht - Filteraufnahmen 5, in die unterschiedliche kreisscheibenförmige Filter 7 einsetzbar sind. In Fig. 1 ist nur in einer der Aufnahmen 5 ein Filter 7 eingesetzt. Der Filterhalter 1 ist im den optischen Strahlengang aufweisenden Gerät, z.B. im Untersuchungsgerät bzw. in der Beleuchtungsanordnung, derart angeordnet oder anzuordnen, dass durch Drehung des Filterhalters 1 um seine Achse A-A wahlweise einer der optischen Filter 7 in dem Strahlengang, etwa in einem Beleuchtungsstrahlengang des Untersuchungsgeräts, - d. h. zwischen dessen Lichtquelle und dem zu untersuchenden Objekt - bzw. in einem Beleuchtungsstrahlengang der Beleuchtungsanordnung, anzuordnen ist. Für manche Anordnungen könnte der Filterhalter auch in einem Detektions- oder Beobachtungsstrahlengang des Untersuchungsgeräts, etwa zwischen dem Objekt und einer Detektionsanordnung, entsprechend anzuordnen oder angeordnet sein.

Jede der Filteraufnahmen 5 bildet eine vom Außenumfang 3 des Filterhalters 1 radial einwärtige kreissektorförmige Aussparung mit einer radial auswärtigen Öffnung 5a. Der Öffnungswinkel α der Filteraufnahme 5 vom Kreissektor-Mittelpunkt M zum Außenumfang 3 des Filterhalters 1 beträgt weniger als 180°, hier zum Beispiel etwa 100°, damit der Filter von radial außen her leicht ergriffen werden kann, jedoch im eingesetzten Zustand nicht ungewollt herausfällt. Der Umfangsrand der Filteraufnahme 5 ist so angeordnet, dass sein gedachter geschlossener Kreis K - und somit der eingesetzte Filter 7 - radial über den Außenumfang 3 des Filterhalters 1 vorsteht, um den Filter leichter ergreifen zu können. Der Umfangsrand jeder Filteraufnahme 5 bildet einen stufenförmigen Absatz 9. Dieser Absatz 9 weist eine in der Scheibenebene des Filterhalters 1 liegende achsnormale erste Stützfläche 11 und eine sich hieran anschließende axiale zweite Stützfläche 13 auf. Die ersten Stützflächen 11 aller Filteraufnahmen des Filterhalters 1 liegen gemäß dem gezeigten Ausführungsbeispiel in einer gemeinsamen Ebene E-E.

In die Filteraufnahmen 5 ist jeweils ein vom Durchmesser her passender optischer Filter 7 so eingesetzt, dass der Rand seiner unteren, ersten Flachseite auf der ersten Stützfläche 11 aufliegt, während seine Außenumfangsfläche - ggf. mit Spiel - durch die zweite Stützfläche 13 positioniert ist und - zum leichteren Ergreifen des Filters - radial über den Außenumfang 3 des Filterhalters 1 vorsteht.

Um ein Herausfallen des Filters 7 aus dem Filterhalter 1 - etwa bei schneller Drehbewegung des Filterhalters - zu vermeiden, ist jeder Filteraufnahme 5 eine separate Spanneinrichtung 15 - hier in Form einer Blattfeder 15 - zugeordnet. Jede Blattfeder 15 ist in Draufsicht in etwa kreissektorförmig, ist an ihrem der Achse A-A nahen Ende 17 an dem Filterhalter 1 festgelegt, zum Beispiel verstemmt, und enthält an ihrem achsfernen Außenbereich eine kreissektorförmige Aussparung 19, deren Winkelerstreckung und Durchmesser der Winkelerstreckung α und dem freien Innendurchmesser der Filteraufnahme 5 entspricht und dabei - in Achsrichtung A-A betrachtet - mit gegenüberliegenden Abschnitten 11a, 1 1 b der ersten Stützfläche 11 der Filteraufnahme 5 überlappt. Die Spanneinrichtung 15 schränkt somit den nutzbaren freien Durchmesser des Filters 7 nicht oder nur unwesentlich ein.

Das beiderseits der Aussparung 19 verbleibende Blattfedermaterial bildet zwei Federzungen 21 und 23.

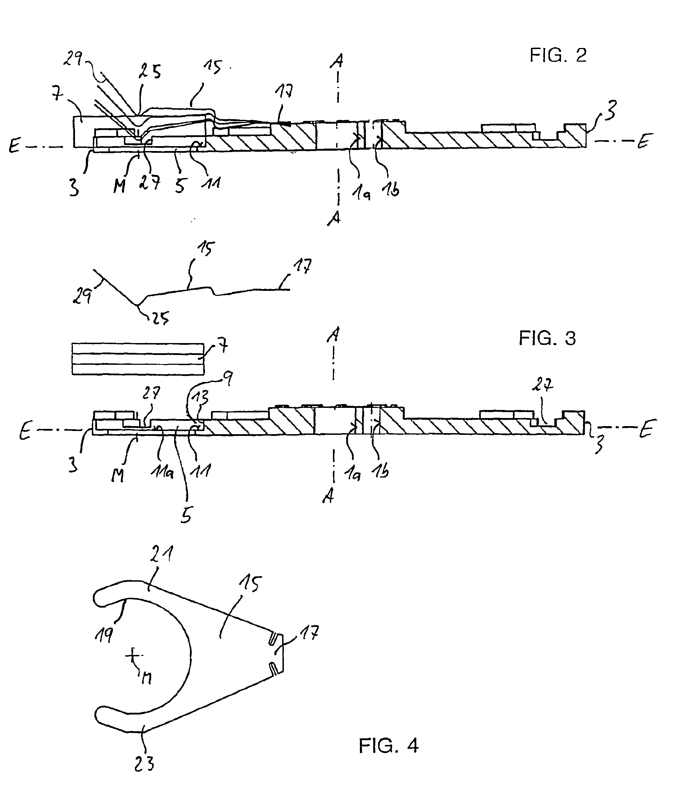

Die Federzungen 21, 23 sind - im achsenthaltenden Schnitt betrachtet - unter Bildung einer Haltenase 25 zu der Filteraufnahme 5 hin geknickt. Die Haltenasen 25 haben einen Abstand von der Achse A-A, der im Wesentlichen gleich dem Abstand der Achse A-A von dem Kreismittelpunkt M jeder Filteraufnahme 5 ist. Unter den Nasen 25 enthalten die achsnormalen Stützflächenabschnitte 1 1 a, 11 b Aussparungen 27, in die die Nasen 25 im entspannten Zustand der Blattfeder 15 hineinragen, wenn kein Filter 7 eingesetzt ist. Dies sorgt für eine relativ hohe Vorspannung der Blattfeder 15 auch auf einen in Achsrichtung relativ dünnen Filter 7. In Figur 2 sind mehrere Stellungen einer Blattfeder 15 für unterschiedlich dicke Filter dargestellt.

Von der Nase 25 radial auswärts erstrecken sich die Zungen 21, 23 schräg axial von dem Filterhalter 1 weg, unter Bildung einer jeweiligen Einführschräge 29, um das radiale Einsetzen des Filters 13 zu erleichtern, ohne die Blattfeder zuvor mit einem gesonderten Handgriff anheben zu müssen.

Der Filterwechsel kann wahlweise durch Drehung des Filterhalters oder durch den Austausch eines oder mehrerer Filter erfolgen.

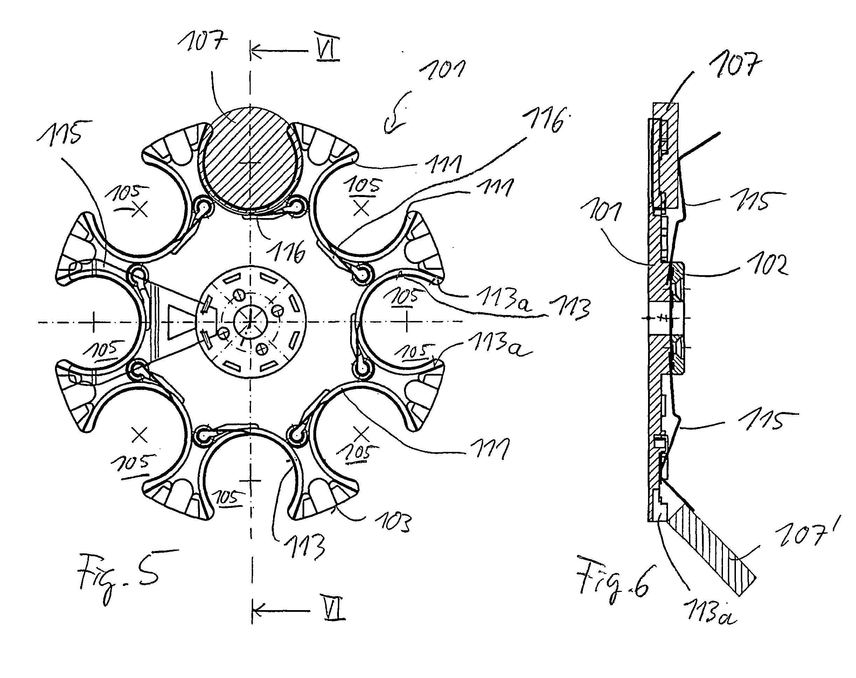

Ein weiteres Ausführungsbeispiel eines erfindungsgemäßen Filterhalters in Form eines Filters ist in Fig. 5 und 6 dargestellt. Es werden für den Filterhalter der Fig. 5 und 6 die gleichen Bezugszeichen wie in den Fig. 1 bis 4 verwendet, jeweils um die Zahl 100 vermehrt. Es werden hier nur die Unterschiede, soweit hier von Interesse, gegenüber dem Beispiel der Fig. 1 bis 4 erläutert und ansonsten ausdrücklich auf die vorangehende, sich auf die Fig. 1 bis 4 beziehende Beschreibung verwiesen.

Der Filterhalter 101 weist acht Filteraufnahmen 105 auf, wobei gemäß Fig. 5 ein Filter 107 in eine dieser Aufnahmen eingesetzt ist und gemäß Fig. 6 ein weiteres Filter 107' gerade in eine zum Filter 107 diametral gegenüber liegende Filteraufnahmen 105 eingesetzt wird oder - nach einer anderen Betrachtungsweise - gerade aus dieser Aufnahme entnommen wird. Wie beim Ausführungsbeispiel der Fig. 1 bis 4 ist jeder Aufnahme 105 eine Blattfeder 115 zugeordnet, die, wie in Fig. 6 zu sehen, durch einen am eigentlichen Filterhalter 101 festgeschraubten Haltering 102 in ihrer Soll-Lage fixiert sind.

Jeder Filteraufnahme 105 ist zusätzlich eine weitere Spanneinrichtung 116 - hier in Form einer Blattfeder 116 - zugeordnet, die von radial innen her am Außenumfang eines jeweils eingesetzten Filters angreift und dieses nach radial außen drückt gegen axiale Stützflächenabschnitte 113a der sich an die achsnormale erste Stützfläche 111 anschließenden axialen zweiten Stützfläche 113. Die als Widerlager für das nach radial außen gedrückte Filter dienende Stützflächenabschnitt 113a erstrecken sich etwas weiter in axialer Richtung als der Rest der axialen zweiten Stützfläche 113, wie in Fig. 6 zu erkennen.

Durch das Anpressen des jeweiligen Filters gegen die als Widerlager dienenden Stützflächen 11 3a ist es an sich nicht erforderlich, dass sich die zweite axiale Stützfläche 113 umfangsmäßig um das Filter herum erstreckt. Im Prinzip reichen die beiden Widerlager-Stützflächen 113a in Verbindung mit der Radialfeder 116 aus, um das Filter definiert in der Filteraufnahme zu halten.

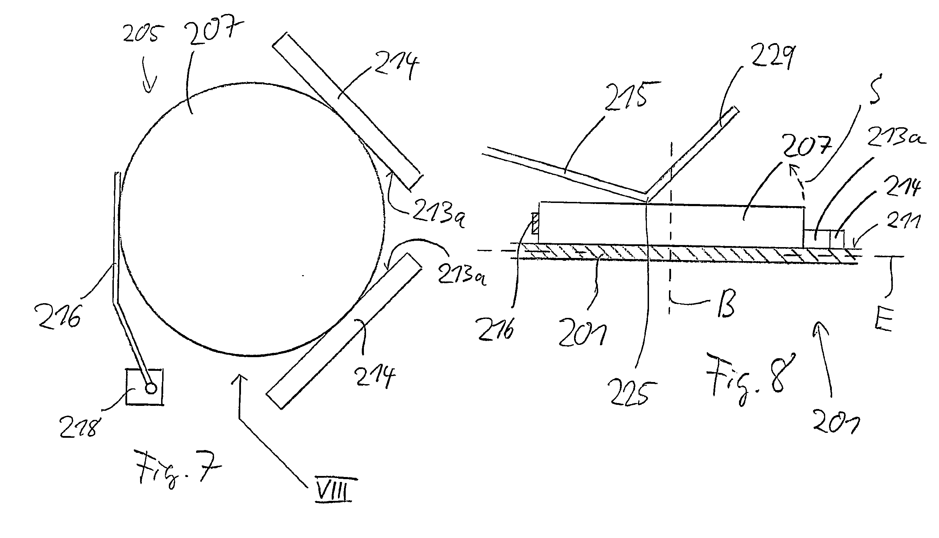

Die Fig. 7 und 8 zeigen schematisch eine weitere Ausführungsmöglichkeit für eine jeweilige Filteraufnahme des Filterhalters. Es sind wiederum die gleichen Bezugszeichen wie in den Fig. 1 bis 4 einerseits und 5 und 6 andererseits verwendet, jeweils vermehrt um 200 in Bezug auf die Bezugszeichen der Fig. 1 bis 4 bzw. vermehrt um 100 in Bezug auf die Bezugszeichen der Fig. 5 und 6. Es werden wiederum nur die Unterschiede gegenüber den vorangehend schon angesprochenen Ausführungsbeispielen erläutert und ansonsten ausdrücklich auf die vorangehenden Erklärungen verwiesen.

Die in einer Verankerung 218 des Filterhalters verankerte, als Blattfeder ausgeführte Radialfeder 216 der weiteren Spannvorrichtung drückt das optische Filter 207 nach radial außen in Bezug auf die Drehachse des Filterhalters gegen zwei axial vorstehende Stege 214, die als Widerlager dienen und eine jeweilige Widerlager-Stützfläche 213a bereitstellen. Die Stege 214 könnten in Tangentialrichtung zum Umfang des Filters auch kürzer ausgeführt sein.

Fig. 8, die einer teilgeschnittenen Ansicht auf die Anordnung der Fig. 7 in Sichtrichtung VIII entspricht, zeigt eine zweckmäßige Ausgestaltung der das Filter 207 gegen die Oberfläche des Filterhalters 201 anpressenden Axialfeder 215. Die von einem Knick der Blattfeder 215 gebildete Nase 225 ist gegenüber einer Mittelachse B des Filters 207 nach radial innen, in Richtung zur Radialfeder 216, versetzt. Man kann dann das Filter 207 dadurch einfach aus der jeweiligen Filteraufnahme entnehmen, dass man radial außen am Filter 207 angreift, dieses gegenüber der Ebene E vom Filterhalter 201 wegschwenkt, wie in Fig. 8 durch den Pfeil S repräsentiert, so dass der Außenumfang des Filters über die Stützflächenabschnitte 113a angehoben wird und dementsprechend nicht mehr als Widerlager gegen die elastische Federkraft der Blattfeder 216 wirksam ist. Diese kann nun, bei entsprechender Auslegung, als Auswurffeder wirken und das betreffende Filter weiter nach radial außen drücken bzw. ein manuelles Entfernen zumindest unterstützen. Wie in Fig. 6 in Bezug auf das Filter 107' gezeigt, kann das Filter 207 dabei an den radial äußeren Federabschnitten 229 der Axialfeder abgleiten.

Die Anordnung der Nase 225 radial innerhalb der durch die Achse B definierten Radialposition in Bezug auf den Filterhalter 201 ist in diesem Zusammenhang nicht zwingend, aber insoweit vorteilhaft, als dass ein größerer Hebelarm für das Anlegen der Wegschwenkkraft am Filter 207 zur Verfügung steht, bezogen auf die durch die Axialfeder 215 an der Nase 225 auf das Filter ausgeübten Kräfte in axialer Richtung, die diesem Schwenken entgegenwirken. Wie anhand von Fig. 8 erkennbar, kann das Filter 207 als einarmiger Hebel aufgefasst werden, wobei für die von der Axialfeder 215 ausgeübten Anpresskräfte eine kleinere Hebelarmlänge wirksam ist als für die manuell (oder ggf. auch maschinell) ausgeübten Wegschwenkkräfte.

Ist das Filter einmal hinreichend so weit von der Ebene E weggeschwenkt, dass die Widerlager-Stützflächenabschnitte 213a nicht mehr wirksam sind, gleitet das Filter bevorzugt einerseits an den radial äußeren Blattfederabschnitten 229 und andererseits - wenn man von einer Konstruktion entsprechend Fig. 5 und 6 ausgeht - mit einer Umfangskante an einer die achsnormale Stützfläche 111 begrenzenden Kante des Filterhalters ab.

Wie beim Ausführungsbeispiel der Fig. 1 bis 4 erfolgt auch bei den Ausführungsbeispielen der Fig. 5 bis 8 ein wahlweiser Filterwechsel durch Drehen des Filterhalters oder/und durch Austausch eines oder mehrerer Filter.

Es ist darauf hinzuweisen, dass auch andersartige Ausführungen des erfindungsgemäßen Filterhalters in Betracht kommen, beispielsweise mit mehreren, jeweils wenigstens eine Filteraufnahme aufweisenden Haltearmen.

Um einen Filterhalter, der eine Mehrzahl von Filteraufnahmen für unterschiedliche optische Filter enthält, die beispielsweise im Beleuchtungsstrahlengang eines optischen Untersuchungsgeräts anzubringen sind, bereitzustellen, mit dem sich ohne Platzprobleme etwa am Gerät und ohne großen Aufwand eine noch größere Anzahl optischer Filter wahlweise benutzen lässt, wird vorgeschlagen, dass den Filteraufnahmen des Filterhalters jeweils eine Spanneinrichtung zugeordnet ist, welche den jeweils eingesetzten optischen Filter in definierter Stellung in der Filteraufnahme betriebsmäßig lösbar hält.

## Patentansprüche

1. Filterhalter, aufweisend eine Mehrzahl von im radialen Abstand zu einer Achse (A-A) angeordneten Filteraufnahmen (5; 105; 205), die zur Aufnahme unterschiedlicher optischer Filter (7; 107; 207) dienen und Positionierungsflächen (11, 13; 111, 113; 211, 213a) für die Filter (7; 107; 207) enthalten, welche derart angeordnet sind, dass die an ihnen anliegenden Filter (7; 107; 207) in einer definierten Stellung in den Filteraufnahmen (5; 105; 205) positioniert sind, wobei der Filterhalter (1; 101; 201) um seine Achse (A-A) drehbar in einem optischen Strahlengang, insbesondere im Strahlengang einer Beleuchtungsanordnung, vorzugsweise für ein optisches Untersuchungsgerät, ggf. Mikroskop, oder im Strahlengang eines optischen Untersuchungsgeräts, ggf. Mikroskop, derart positioniert oder positionierbar ist, dass durch Drehung des Filterhalters (1; 101; 201) wahlweise einer der optischen Filter (7; 107; 207) im Strahlengang anordenbar ist,
wobei den Filteraufnahmen (5; 105; 205) jeweils eine Spanneinrichtung (15; 115; 215) zugeordnet ist, welche den jeweils eingesetzten optischen Filter (7; 107; 207) in der durch die Positionierungsflächen (11, 13; 111, 113; 211, 213a) definierten Stellung in der Filteraufnahme (5; 105; 205) betriebsmäßig lösbar hält, so dass bei eingebautem Filterhalter jeder Filter separat gegen einen anderen ausgetauscht werden kann,
**dadurch gekennzeichnet, dass** die Filteraufnahmen (5; 105; 205) zur Aufnahme eines Filters (7; 107; 207) - in Achsrichtung des Filterhalters (1; 101; 201) betrachtet - eine den Filter (7; 107; 207) zumindest bereichsweise umschreibende Innenkontur aufweisen wobei eine die Innenkontur definierende geschlossene Linie (K) und der eingesetzte optische Filter (7; 107; 207) radial über einen Außenumfang (3; 103) des Filterhalters (1; 101; 201) vorsteht.

2. Filterhalter nach Anspruch 1, **dadurch gekennzeichnet, dass** die Filteraufnahmen (5; 105; 205) jeweils radial auswärts offen sind.

3. Filterhalter nach Anspruch 1 oder 2, **dadurch gekennzeichnet, dass** die Filteraufnahmen (5; 105) zur Aufnahme eines kreisförmigen Filters (7; 107) - in Achsrichtung des Filterhalters (1; 101) betrachtet - eine kreisbogenförmige Innenkontur aufweisen, wobei der die Innenkontur definierende gedachte Kreis (K) und somit der eingesetzte optische Filter (7; 107) - radial über einen Außenumfang (3; 103) des Filterhalters (1; 101) vorsteht.

4. Filterhalter nach Anspruch 2 oder 3, **dadurch gekennzeichnet, dass** die radial auswärtige Öffnung (5a) der Filteraufnahmen (5; 105; 205) in Umfangsrichtung des Filterhalters (1; 101; 201) verengt ist, um eine radiale Auswärtsbewegung des eingesetzten optischen Filters (7; 107; 207) zu verhindern.

5. Filterhalter nach einem der vorhergehenden Ansprüche, **dadurch gekennzeichnet, dass** die Positionierungsflächen (11, 13; 111, 113; 211, 213a) der Filteraufnahmen (5; 105; 205) wenigstens eine achsnormale Stützfläche (11; 111; 211) zur Positionierung des eingesetzten Filters (7; 107; 207) in einer der axialen Richtungen oder/und zumindest eine sich axial erstreckende Stützfläche (13; 113; 213) zur Positionierung des eingesetzten Filters (7; 107; 207) in radialer sowie Umfangsrichtung des Filterhalters (1; 101; 201) umfassen.

6. Filterhalter nach Anspruch 5, **dadurch gekennzeichnet, dass** die achsnormalen Stützflächen (11; 111; 211) in einer gemeinsamen Ebene (E-E) liegen.

7. Filterhalter nach Anspruch 5 oder 6, **dadurch gekennzeichnet, dass** die achsnormale Stützfläche (11; 111) und die sich axial erstreckende Stützfläche (13; 113) einen in der Filteraufnahme (5; 105) umlaufenden, zur anderen axialen Richtung hin offenen, stufenförmigen Absatz (9) bilden.

8. Filterhalter nach einem der Ansprüche 5 bis 7, **dadurch gekennzeichnet, dass** den Filteraufnahmen (105; 205) jeweils eine weitere Spanneinrichtung (115; 215) zugeordnet ist, welche den jeweils eingesetzten optischen Filter (107; 207) gegen die oder wenigstens eine sich axial erstreckenden Stützfläche (113a; 213a) andrückt.

9. Filterhalter nach Anspruch 8, **dadurch gekennzeichnet, dass** die weitere Spanneinrichtung (115; 215) den jeweiligen Filter (107; 207) gegen zwei in Umfangsrichtung des Filterhalters (101; 201) gegeneinander beabstandete, sich axial erstreckende Stützflächen (113a; 213a) andrückt.

10. Filterhalter nach Anspruch 8 oder 9, **dadurch gekennzeichnet, dass** die weitere Spanneinrichtung (115; 215) den jeweiligen Filter (107; 207) im Wesentlichen in radialer Richtung, vorzugsweise nach radial außen, drückt.

11. Filterhalter nach einem der vorhergehenden Ansprüche, **dadurch gekennzeichnet; dass** die Spanneinrichtung (15; 115; 215) in axialer Richtung des Filterhalters (1; 101; 201) derart vorgespannt ist, dass sie den in die Filteraufnahme (5; 105; 205) eingesetzten Filter (7; 107; 207) in axialer Richtung auf die zugeordnete Positionierungsfläche (11; 111; 211) drückt.

12. Filterhalter nach einem der vorhergehenden Ansprüche, **dadurch gekennzeichnet, dass** die Spanneinrichtung (15; 115; 215) Eingriffsabschnitte (21, 23, 25) aufweist, die in Umfangsrichtung des Filterhalters gegenüber liegende Abschnitte (11a, b) der achsnormalen Stützfläche (11; 111; 211) der Positionierungsflächen in Achsrichtung (A-A) überlappen und mit dem eingesetzten Filter (7; 107; 207) in Eingriff bringbar sind.

13. Filterhalter nach Anspruch 12, **dadurch gekennzeichnet, dass** die Spanneinrichtung (15; 115) zwischen ihren Eingriffsabschnitten (21, 23, 25) der Innenkontur der Filteraufnahme (5; 105) im Wesentlichen folgend gabelförmig ausgespart ist.

14. Filterhalter nach Anspruch 12 oder 13, **dadurch gekennzeichnet, dass** die Eingriffsabschnitte (21, 23, 25) Kanten oder Nasen (25; 225) aufweisen, die zu den gegenüber liegenden Stützflächenabschnitten (11a, b; 211) hin vorstehen und zum punktuellen oder linienförmigen oder kleinflächigen Eingriff mit dem jeweiligen Filter (7; 207) dienen.

15. Filterhalter nach Anspruch 14, **dadurch gekennzeichnet, dass** die Stützflächen (11) den Kanten oder Nasen (25) gegenüber liegende Aussparungen (27) enthalten, in die im entlasteten Zustand der Spanneinrichtung (15) die Kanten oder Nasen (25) ragen.

16. Filterhalter nach einem der Ansprüche 12 bis 15, **dadurch gekennzeichnet, dass** die Eingriffsabschnitte (21, 23, 25) der Spanneinrichtung (15; 115; 215) zu axial von dem Filterhalter (1; 101; 201) abstehenden Einführschrägen (29; 229) radial auswärts verlängert sind, um beim Einsetzen eines Filters (7; 107; 207) mit dessen Rand in Eingriff zu treten und die Eingriffsabschnitte (21, 23, 25; 225) von den Positionierungsflächen (11, 13; 111, 113; 211, 213a) weg zu bewegen.

17. Filterhalter nach einem der Ansprüche 14 bis 16, **dadurch gekennzeichnet, dass** die Eingriffsabschnitte (225) derart ausgeführt sind, dass die Nasen oder Kanten (225) gegenüber einer radialen Mitte der jeweiligen Filteraufnahme radial weiter innen liegen, derart, dass die Nasen oder Kanten an einem eingesetzten Filter (207) an Stellen angreifen, die gegen über einer Mitte (B) des Filters in Richtung nach radial innen bezogen auf den Filterhalter (201) versetzt sind.

18. Filterhalter nach einem der Ansprüche 12 bis 16, **dadurch gekennzeichnet, dass** die Spanneinrichtung (15; 115; 215) wenigstens eine nahe der Achse (A-A) des Filterhalters (1; 101; 201) an diesem festgelegte Blattfeder (15; 115; 215) aufweist, deren Federzunge die Eingriffsabschnitte (21, 23, 25; 225) der Spanneinrichtung bildet.

19. Filterhalter nach einem der vorhergehenden Ansprüche, **dadurch gekennzeichnet, dass** die Spanneinrichtungen (15; 115; 215) der jeweiligen Filteraufnahmen (5; 105; 205) an einer gemeinsamen axialen Seite des Filterhalters (1; 101; 201) in Umfangsrichtung nebeneinander, ohne einander zu überlappen, angeordnet sind.

20. Filterhalter nach einem der vorhergehenden Ansprüche, **dadurch gekennzeichnet, dass** er wenigstens ein Drehmoment-Mitnahmeelement (1b) zum drehenden Antrieb durch einen Motor, ggf. Schrittmotor, aufweist.

21. Optische Filtervorrichtung, umfassend einen Filterhalter nach einem der vorhergehenden Ansprüche und eine diesen drehbar haltende Drehbasis.

22. Filtervorrichtung nach Anspruch 21, **dadurch** gekenntzeichnet, dass die Drehbasis einen Motor, ggf. Schrittmotor, zum Drehantrieb des Filterhalters aufweist.

23. Beleuchtungsanordnung für eine optisches Untersuchungsgerät, insbesondere Mikroskop, mit einem Filterhalter (1; 101; 201) oder einer Filtervorrichtung nach einem der vorhergehenden Ansprüche.

24. Optisches Untersuchungsgerät, insbesondere Mikroskop, in dessen Beleuchtungsstrahlengang oder Detektions- oder Beobachtungsstrahlengang ein Filterhalter (1; 101; 201) oder eine Filtervorrichtung nach einem der Ansprüche 1 bis 22 angeordnet ist.

## Claims

1. A filter holder, having a plurality of filter receptacles (5;105;205) arranged at a radial distance apart, which serve to receive different optical filters (7;107;207) and contain positioning surfaces (11;13;111;113;211;213a) for the filters (7;107;207), which are arranged in such a way that the filters (7;107;207) adjacent thereto are positioned in a defined position in the filter receptacles (5;105;205), wherein the filter holder (1;101;201) is or can be positioned rotatably in an optical beam path, in particular in the beam path of an illuminating assembly, preferably for an optical inspection instrument, optionally a microscope, or in the beam path of an optical inspection instrument, optionally a microscope, in that by rotating the filter holder (1;101;201) selectively one of the optical filters (7;107;207) can be arranged in the beam path,
wherein the filter receptacles (5;105;205) are assigned a respective clamping device (15;115;215) which retains operationally and releasably the respective inserted optical filter (7;107;207) in the position in the filter receptacle (5;105;205) defined by the positioning surfaces (11;13;111;113; 211;213a) so that, with the filter holder installed, each filter can be exchanged for another filter,
**characterised in that**, viewed in the axial direction of the filter holder (1;101;201), the filter receptacles (5;105;205), to receive a filter (7;107;207), have an inner contour circumscribing at least in portions the filter (7;107;207), wherein a closed line (K) defining the inner contour and the inserted optical filter (7;107;207) projects radially over an outer periphery (3;103) of the filter holder (1;101;201).

2. A filter holder according to Claim 1, **characterised in that** filter receptacles (5;105;205) are each open radially outwards.

3. A filter holder according to Claim 1 or 2, **characterised in that** the filter receptacles (5;105;205) for receiving a circular filter (7;107) have, viewed in the axial direction of the filter holder (1;101), a circular arc-shaped inner contour, wherein the imaginary circle (K) defining the inner contour, and thus the inserted optical filter (7;107), projects radially over the outer periphery (3;103) of the filter holder (1;101).

4. A filter holder according to Claim 2 or 3, **characterised in that** the radially outward opening (5a) of the filter receptacles (5;105;205) is narrowed in the peripheral direction of the filter holder (1;101;201) so as to prevent radial outward movement of the inserted optical filter (7;107;207).

5. A filter holder according to any one of the preceding Claims, **characterised in that** the positioning surfaces (11;13;11;113;211; 213a) of the filter receptacles (5;105;205) comprise at least one axially normal support surface (11;111;211) for the positioning of the inserted filter (7;107;207) in one of the axial directions and/or at least one axially extending support surface (13;113;213) for positioning the inserted filter (7;107;207) in the radial and peripheral direction of the filter holder (1;101;201).

6. A filter holder according to Claim 5, **characterised in that** the axially normal support surfaces (11;111;211) lie on a common plane (E-E).

7. A filter holder according to Claim 5 or 6, **characterised in that** the axially normal support surface (11;111) and the axially extending support surface (13;113) form a step-like shoulder (9) open towards the other axial direction.

8. A filter holder according to any one of Claims 1 to 7, **characterised in that** the filter receptacles (105;205) are assigned a respective further clamping device (115;215) which presses the respective inserted optical filter (107;207) against the or at least one axially support surface (113a;213a).

9. A filter holder according to Claim 8, **characterised in that** the further clamping device (115;215) presses the respective filter (107;207) against two axially extending support surfaces (113a;213a) which are spaced apart in the peripheral direction of the filter holder (101;201).

10. A filter holder according to Claim 8 or 9, **characterised in that** the further clamping device (115;215) presses the respective filter (7;107;207) in a substantially radial direction, preferably radially outwards.

11. A filter holder according to any one of the preceding Claims, **characterised in that** the clamping device (15;115;215) is preloaded in the axial direction of the filter holder (1;101;201) so that it presses the filter (7;107;207), inserted into the filter receptacle (5;105;205), in an axial direction on to the associated positioning surface (11;111;113;211).

12. A filter holder according to any one of the preceding Claims, **characterised in that** the clamping device (15;115;215) has engagement portions (21,23,25) which overlap portions (11a,b) of the axially normal support surface (11;111;211) of the positioning surfaces situated opposite one another in the peripheral direction of the filter holder and which can be brought into engagement with the inserted filter (7;107;207).

13. A filter holder according to Claim 12, **characterised in that**, between its engagement portions (21,23,25), the clamping device (15;115) is recessed in a fork-like manner substantially following the inner contour of the filter receptacle (5;105).

14. A filter holder according to Claim 12 or 13, **characterised in that** the engagement portions (21,23,25) have edges or lugs (25;225) which project towards the support surface portions (11a,b;111;211) situated opposite one another and serve for the point-like or linear or small-area engagement with the respective filter (7;207).

15. A filter holder according to Claim 14, **characterised in that** the support surfaces (11) include recesses (27) which are situated opposite the edges or lugs (25) and into which the edges or lugs (25) project in the relaxed condition of the clamping device (15).

16. A filter holder according to any one of Claims 12 to 15, **characterised in that** the engagement portions (21,23,25) of the clamping device (15;115;215) are extended radially outwardly to form insertion slopes (29;229) protruding axially from the filter holder (1;101;201) so that, upon insertion of a filter (7;107;207), it comes into engagement with the edge thereof and the engagement portions (21,23,25;225) move away from the positioning surfaces (11;13;111;113; 211;213a).

17. A filter holder according to any one of Claims 14 to 16, **characterised in that** the engagement portions (225) are so formed that the lugs or edges (25) are situated radially further inwards relative to a radial centre of the respective filter receptacle so that the lugs or edges engage on an inserted filter (207) at locations which are offset radially inwards in relation to the filter holder (201) relative to a centre (B) of the filter.

18. A filter holder according to any one of Claims 12 to 16, **characterised in that** the clamping device (15;115;215) has at least one leaf spring (15;115;215) retained on the filter holder (1;101;201) near the axis (A-A) thereof, the spring tongues of which form the engagement portions (21,23,25;225) of the clamping device.

19. A filter holder according to any one of the preceding Claims, **characterised in that** the clamping devices (15;115;215) of the respective filter receptacles (5;105;205) are arranged on a common axial side of the filter holder (1;101;201) adjacent one another in a peripheral direction and without overlapping one another.

20. A filter holder according to any one of the preceding Claims, **characterised in that** it has at least one torque-entrainment element (1b) for rotary drive by a motor, optionally a stepping motor.

21. An optical filter apparatus comprising a filter holder according to any one of the preceding Claims and a rotary base rotatably holding the latter.

22. A filter apparatus according to Claim 21, **characterised in that** the rotary base has a motor, optionally a stepping motor, for the rotary drive of the filter holder.

23. An illuminating assembly for an optical inspection instrument, in particular a microscope, with a filter holder (1;101;201) or a filter apparatus according to any one of the preceding Claims.

24. An optical inspection instrument, in particular a microscope, in the illumination beam path or detection or observation beam path of which there is arranged a filter holder (1;101;201) or a filter apparatus according to any one of Claims 1 to 22.

## Revendications

1. Porte-filtre présentant une pluralité de logements de filtre (5 ; 105 ; 205) disposés à distance radiale d'un axe (A-A), qui servent au logement de filtres (7 ; 107 ; 207) optiques différents et contiennent des surfaces de positionnement (11, 13 ; 111, 113 ; 211, 213a) pour les filtres (7 ; 107 ; 207), qui sont disposées de sorte que les filtres (7 ; 107 ; 207) reposant sur celles-ci soient positionnés dans une position définie dans les logements de filtre (5 ; 105 ; 205), dans lequel le porte-filtre (1 ; 101 ; 201) est ou peut être positionné de manière rotative autour de son axe (A-A) dans une trajectoire de rayon optique, en particulier dans la trajectoire de rayon d'un ensemble d'éclairage, de préférence pour un appareil d'examen optique, éventuellement un microscope, ou dans la trajectoire de rayon d'un appareil d'examen optique, éventuellement un microscope de telle sorte que par la rotation du porte-filtre (1 ; 101 ; 201), au choix l'un des filtres optiques (7 ; 107 ; 207) puisse être disposé dans la trajectoire de rayon,
dans lequel aux logements de filtre (5 ; 105 ; 205) est associé respectivement un dispositif de serrage (15 ; 115 ; 215) qui maintient de manière amovible selon le fonctionnement le filtre (7 ; 107 ; 207) optique utilisé respectivement dans la position définie par les surfaces de positionnement (11, 13 ; 111, 113 ; 211, 213a) dans le logement de filtre de sorte que lorsque le porte-filtre est installé, chaque filtre puisse être remplacé séparément par un autre,
**caractérisé en ce que** les logements de filtre (5 ; 105 ; 205) pour le logement d'un filtre (7 ; 107 ; 207) présentent, vu dans le sens axial du porte-filtre (1 ; 101 ; 201), un contour intérieur décrivant au moins par endroits le filtre (7 ; 107 ; 207), une ligne (K) fermée définissant le contour intérieur et le filtre (7 ; 107; 207) optique utilisé dépassant radialement sur une périphérie extérieure (3 ; 103) du porte-filtre (1 ; 101 ; 201).

2. Porte-filtre selon la revendication 1, **caractérisé en ce que** les logements de filtre (5 ; 105 ; 205) sont ouverts respectivement radialement vers l'extérieur.

3. Porte-filtre selon la revendication 1 ou 2, **caractérisé en ce que** les logements de filtre (5 ; 105) pour le logement d'un filtre (7 ; 107) circulaire présentent, vu dans le sens axial du porte-filtre (1 ; 101), un contour intérieur en forme d'arc de cercle, le cercle (K) imaginaire définissant le contour intérieur et ainsi le filtre (7 ; 107) optique utilisé dépassant radialement sur une périphérie extérieure (3 ; 103) du porte-filtre (1 ; 101).

4. Porte-filtre selon la revendication 2 ou 3, **caractérisé en ce que** l'ouverture (5a) radialement extérieure des logements de filtre (5 ; 105 ; 205) est rétrécie dans le sens périphérique du porte-filtre (1 ; 101 ; 201) afin d'empêcher un mouvement extérieur radial du filtre (7 ; 107 ; 207) optique utilisé.

5. Porte-filtre selon l'une quelconque des revendications précédentes, **caractérisé en ce que** les surfaces de positionnement (11, 13 ; 111, 113 ; 211, 213a) des logements de filtre (5 ; 105 ; 205) comprennent au moins une surface d'appui (11 ; 111 ; 211) normale à l'axe pour le positionnement du filtre (7 ; 107 ; 207) utilisé dans l'un des sens axiaux et/ou au moins une surface d'appui (13 ; 113 ; 213) s'étendant axialement pour le positionnement du filtre (7 ; 107 ; 207) utilisé dans le sens radial ainsi que périphérique du porte-filtre (1 ; 101 ; 201).

6. Porte-filtre selon la revendication 5, **caractérisé en ce que** les surfaces d'appui (11 ; 111 ; 211) normales à l'axe se trouvent dans un plan commun (E-E).

7. Porte-filtre selon la revendication 5 ou 6, **caractérisé en ce que** la surface d'appui (11 ; 111) normale à l'axe et la surface d'appui (13 ; 113) s'étendant axialement forment un décrochement (9) étagé, ouvert vers l'autre sens axial, périphérique dans le logement de filtre (5 ; 105).

8. Porte-filtre selon l'une quelconque des revendications 5 à 7, **caractérisé en ce qu'**aux logements de filtre (105 ; 205) est associé respectivement un autre dispositif de serrage (115 ; 215) qui presse le filtre (107 ; 207) optique utilisé respectivement contre la ou au moins une surface d'appui (113a ; 213a) s'étendant axialement.

9. Porte-filtre selon la revendication 8, **caractérisé en ce que** l'autre dispositif de serrage (115 ; 215) presse le filtre (107 ; 207) respectif contre deux surfaces d'appui (113a ; 213a) s'étendant axialement, espacées l'une de l'autre dans le sens périphérique du porte-filtre (101 ; 201).

10. Porte-filtre selon la revendication 8 ou 9, **caractérisé en ce que** l'autre dispositif de serrage (115 ; 215) presse le filtre (107 ; 207) respectif essentiellement dans le sens radial, de préférence radialement vers l'extérieur.

11. Porte-filtre selon l'une quelconque des revendications précédentes, **caractérisé en ce que** le dispositif de serrage (15 ; 115 ; 215) est précontraint dans le sens axial du porte-filtre (1 ; 101 ; 201) de sorte qu'il presse le filtre (7 ; 107 ; 207) utilisé dans le logement de filtre (5 ; 105 ; 205) dans le sens axial sur la surface de positionnement (11 ; 111 ; 211) associée.

12. Porte-filtre selon l'une quelconque des revendications précédentes, **caractérisé en ce que** le dispositif de serrage (15 ; 115 ; 215) présente des sections d'engagement (21, 23, 25) qui recouvrent des sections (11a, b) s'opposant dans le sens périphérique du porte-filtre de la surface d'appui (11 ; 111 ; 211) normale à l'axe des surfaces de positionnement dans le sens axial (A-A) et peuvent être amenées en engagement avec le filtre (7 ; 107 ; 207) utilisé.

13. Porte-filtre selon la revendication 12, **caractérisé en ce que** le dispositif de serrage (15 ; 115) est évidé de manière fourchue suivant essentiellement le contour intérieur du logement de filtre (5 ; 105) entre ses sections d'engagement (21, 23, 25).

14. Porte-filtre selon la revendication 12 ou 13, **caractérisé en ce que** les sections d'engagement (21, 23, 25) présentent des arêtes ou nez (25 ; 225) qui dépassent vers les sections de surface d'appui (11a, b ; 211) opposées et servent à l'engagement ponctuel ou linéaire ou de petite surface avec le filtre (7 ; 207) respectif.

15. Porte-filtre selon la revendication 14, **caractérisé en ce que** les surfaces d'appui (11) contiennent des évidements (27) s'opposant aux arêtes ou nez (25) dans lesquels dépassent à l'état libéré du dispositif de serrage (15) les arêtes ou nez (25).

16. Porte-filtre selon l'une quelconque des revendications 12 à 15, **caractérisé en ce que** les sections d'engagement (21, 23, 25) du dispositif de serrage (15 ; 115 ; 215) sont rallongées radialement vers l'extérieur pour former des biais d'introduction (29 ; 229) en saillie axialement du porte-filtre (1 ; 101 ; 201) afin de venir en prise lors de l'utilisation d'un filtre (7 ; 107 ; 207) avec son bord et d'éloigner les sections d'engagement (21, 23, 25 ; 225) des surfaces de positionnement (11, 13 ; 111, 113 ; 211, 213a).

17. Porte-filtre selon l'une quelconque des revendications 14 à 16, **caractérisé en ce que** les sections d'engagement (225) sont réalisées de sorte que les nez ou arêtes (225) se trouvent radialement davantage à l'intérieur par rapport à un milieu radial de chaque logement de filtre de sorte que les nez ou arêtes agissent sur un filtre (207) utilisé aux endroits qui sont décalés par rapport à un milieu (B) du filtre en direction radialement à l'intérieur par rapport au porte-filtre (201).

18. Porte-filtre selon l'une quelconque des revendications 12 à 16, **caractérisé en ce que** le dispositif de serrage (15 ; 115 ; 215) présente au moins un ressort à lame (15 ; 115 ; 215) fixé près de l'axe (A-A) du porte-filtre (1 ; 101 ; 201) sur celui-ci, dont la lame flexible forme les sections d'engagement (21, 23, 25 ; 225) du dispositif de serrage.

19. Porte-filtre selon l'une quelconque des revendications précédentes, **caractérisé en ce que** les dispositifs de serrage (15 ; 115 ; 215) des logements de filtre (5 ; 105 ; 205) respectifs sont disposés sur un côté axial commun du porte-filtre (1 ; 101 ; 201) dans le sens périphérique les uns à côté des autres sans se recouvrir.

20. Porte-filtre selon l'une quelconque des revendications précédentes, **caractérisé en ce qu'**il présente au moins un élément d'entraînement de couple (1 b) pour l'entraînement rotatif par un moteur, éventuellement un moteur pas à pas.

21. Dispositif de filtrage optique comportant un porte-filtre selon l'une quelconque des revendications précédentes et une base rotative maintenant celui-ci à rotation.

22. Dispositif de filtrage selon la revendication 21, **caractérisé en ce que** la base rotative présente un moteur, éventuellement un moteur pas à pas, pour l'entraînement rotatif du porte-filtre.

23. Ensemble d'éclairage pour un appareil d'examen optique, en particulier un microscope, avec un porte-filtre (1 ; 101 ; 201) ou un dispositif de filtrage selon l'une quelconque des revendications précédentes.

24. Appareil d'examen optique, en particulier microscope, dans la trajectoire de rayon d'éclairage ou de détection ou d'observation duquel est disposé un porte-filtre (1 ; 101 ; 201) ou un dispositif de filtrage selon l'une quelconque des revendications 1 à 22.
